# EUROPEAN PATENT APPLICATION

(11) **EP 2 492 644 A2**
(43) Date of publication of application: **29.08.2012**
(21) Application number: 12156412.4
(22) Date of filing: 21.02.2012
(51) Int. Cl.: G01D 4/00

(54) **Distributed computing with meters**

(30) Priority: 23.02.2011 US 201113032830
(71) Applicant: General Electric Company, Schenectady, NY 12345 (US)
(72) Inventor: Short, Zachary Meriwether, Somersworth, NH 03878 (US)
(74) Representative: Cleary, Fidelma

(57) **Abstract**

A utility meter (101) includes a processor (202) operative to receive a data processing task and data at a utility meter (101), process the data in the meter (101), and send the results of the processing from the utility to a server (102).

## Description

### BACKGROUND OF THE INVENTION

The subject matter disclosed herein relates to utility meter systems and distributed computing.

Utility meter systems may include, for example, electricity meters, gas meters, or water meters that measure the usage of a particular service. Previous meters were mechanical and could be visually read by a technician to determine service usage.

With the advent of electronic meters, a variety of systems have been implemented that allow a meter to receive and output data via a communications network such as, a wireless data network or a wired data network. The use of a data network allows an operator to remotely monitor readings on the meter, and in some instances, direct the meter or associated devices to control a portion of the system.

### BRIEF DESCRIPTION OF THE INVENTION

According to one aspect, the invention resides in a method for processing data with a meter system including receiving a data processing task and data at a utility meter, processing the data in the meter, and sending the results of the processing from the utility to a server.

According to another aspect, the invention resides in a utility meter comprising a processor operative to receive a data processing task and data at a utility meter, process the data in the meter, and send the results of the processing from the utility to a server.

According to yet another aspect, the invention resides in a utility system including a server, a data network, and the utility meter as described above communicatively connected with the server via the data network.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 illustrates a block diagram of an exemplary embodiment of a meter system.
FIG. 2 illustrates a block diagram of an exemplary embodiment of the meter of FIG. 1.
FIG. 3 illustrates a block diagram of an exemplary method of distributed processing in the meter.

The detailed description explains embodiments of the invention, together with advantages and features, by way of example with reference to the drawings.

### DETAILED DESCRIPTION OF THE INVENTION

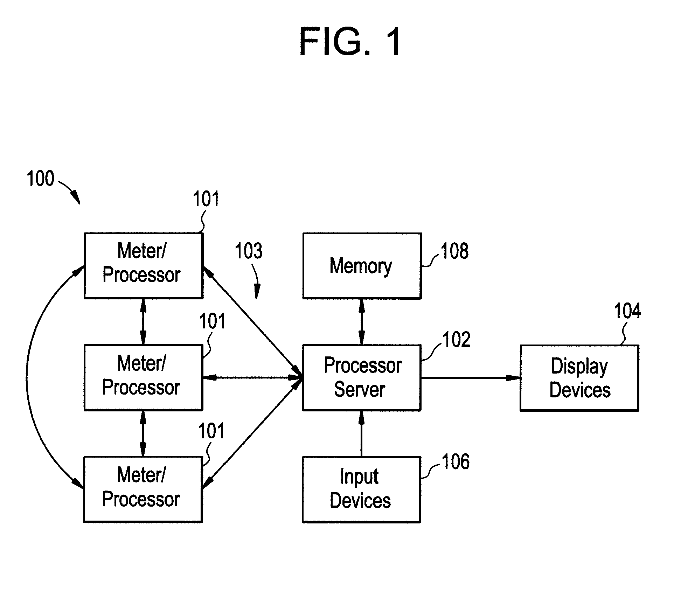

FIG. 1 illustrates a block diagram of an exemplary embodiment of a meter system 100. The system 100 includes a processor or server 102 that is communicatively connected to a display device 104, an input device 106, and a memory 108. A plurality of meters 101 are communicatively connected to the server 102 via a data network 103. The data network 103 may include any type of data network, such as for example, a wireless or wired data network.

In operation, the system 100 may be used to perform a variety of shared, distributed, or parallel computing tasks that may be coordinated by the server 102 with the meters 101. For example, the operation of a power distribution system includes a variety of processing tasks that may be performed by the server 102 and/or shared with the meters 101. The use of the meters 101 to assist in performing such processing tasks may reduce the size of dedicated servers for processing such tasks, and improves the reliability of the system by increasing and distributing the number of processors.

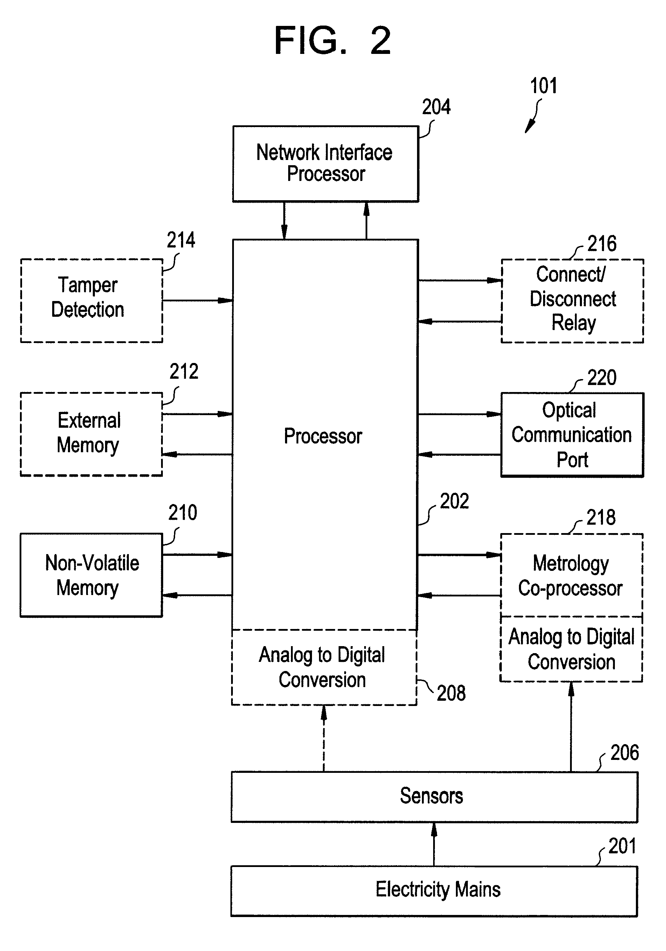

FIG. 2 illustrates a block diagram of an exemplary embodiment of a meter 101. The meter 101 includes a processor 202 that is connected to a network interface portion 204, which includes a processor, and is operative to process, send, and receive data via the data networks 103 (of FIG. 1). The processor 202 receives metrology data from sensors 206 that output signals to the processor 202. The signals may be processed by an analog to digital converter portion 208. In the illustrated embodiment, the meter 101 senses voltage and current from electricity mains 201. The processor 202 is communicatively connected to a non-volatile memory portion 210. The illustrated embodiment of the meter 101 includes a number of portions that may be included or not included in any combination in alternate embodiments. For example, the processor 202 may be connected to an external memory device 212. The meter 101 may include a tamper detection portion 214 that is operative to detect tampering with the meter such as, for example, an unauthorized opening of the casing (not shown) of the meter 101. The meter 101 may be connected to a connect/disconnect relay assembly 216 that is operative to connect or disconnect a device or portion of an electrical system from the electricity mains 201. A metrology co-processor 218 may be communicatively connected to the processor 202 and the sensors 206 to perform some metrology processing tasks. The processor 202 may also be communicatively connected to an optical communications port 220 that facilitates optical communications with the processor 202. Though the illustrated exemplary embodiment includes an electrical meter, other types of meters such as, for example, gas or water meters may include similar components and functions, however, the sensors 206 may be chosen for the applicable type of meter. Though the illustrated embodiment and the illustrations described below describe the use of the processor 202, one of ordinary skill in the art would understand that the network interface portion 204 may include a processor 202 that may be operative to perform similar shared processing tasks as the processor 202. Thus, the exemplary embodiments include processing that may be performed by the processor 202 and/or the network interface portion 204.

Referring to FIG. 1, the system 100 may include any number of meters 101 that each include a processor 202 (of FIG. 2) and network interface portion 204 that allow the meters 101 to communicate with the server 102 and/or other meters 101 over the data network 103. Though the primary function of the meters 101 includes sensing and metering the use of a particular service, the processors 202 may also be used for other computing tasks using a distributed or parallel processing scheme. For example, in a distributed processing scheme the server 102 may send processing instructions and data to a number of meters 101. The meters 101 may store the instructions and data in the non-volatile memory 210 or memory 212 and perform the processing task. Once the processing task is complete, the meters 101 may send the results of the processing to the server 102 or other meters 101, which may use the processed data and send additional processing tasks and data to the meters 101. In a parallel processing scheme, the meters 101 may receive processing instructions from the server 102 and may retrieve and store data in the memory 108, which is associated with the server 102.

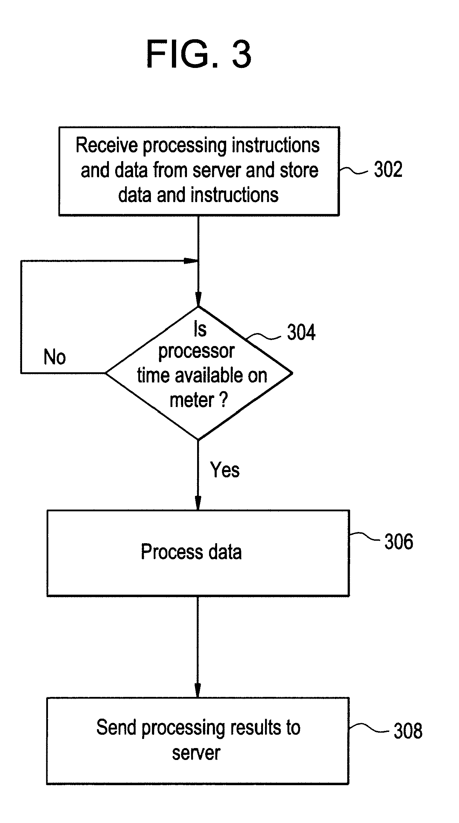

FIG. 3 illustrates a block diagram of an exemplary method of distributed processing in a meter 101 (of FIG. 1). In block 302, the meter processor 202 (of FIG. 2) receives a processing instruction and data from the server 102 and stores the instructions and the data. In block 304, the processor 202 determines whether the processor 202 is available to process the received data. If no, the processor 202 may be performing, for example, metrology tasks and will delay the processing of the received data until, the processor 202 is available. If yes, the processor 202 processes the data in block 306. In block 308, the meter 101 sends the results to the server 102 via the communications network 103.

The illustrated exemplary method of FIG. 3 is merely an example of a method for distributing computing tasks over the system 100. In this regard, the system 100 may perform any number of different distributed, parallel, or shared computing schemes.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for processing data with a meter system, the method comprising:
receiving a data processing task and data at a utility meter (101);
processing the data in the meter (101); and
sending results of the processing from the utility meter (101) to a server (102).

2. The method of claim 1, wherein the method further includes:
determining whether the utility meter (101) is available to process the data responsive to receiving the data processing task and the data; and
processing the data in the meter (101) responsive to determining that the utility meter is available to process the data.

3. The method of claim 1 or 2, wherein the data processing task is received from the server (102).

4. The method of claim 1 or 2, wherein the data processing task is received from a second meter (101).

5. The method of any of claims 1 to 4, wherein the method further includes saving the data processing task and data in a memory (108) associated with the utility meter (101) responsive to receiving the data processing task and data.

6. The method of any preceding claim, wherein the data processing task and data are associated with a distributed computing processing task.

7. The method of any of claims 1 to 5, wherein the data processing task and data are associated with a parallel computing processing task.

8. The method of any preceding claim, wherein the data processing task and data are sent from the server (102) to the utility meter (101) via a data network (103).

9. A utility meter (101) comprising a processor (202) operative to receive a data processing task and data at a utility meter (101), process the data in the meter (101) and send the results of the processing from the utility to a server (102).

10. The utility meter (101) of claim 9, wherein the processor (202) is further operative to determine whether the utility meter (101) is available to process the data responsive to receiving the data processing task and the data, and process the data in the meter responsive to determining that the utility meter (101) is available to process the data.

11. The utility meter of claim 9 or 10, wherein the meter (101) includes a memory portion (108) communicatively connected to the processor (202) operative to save the data processing task and data in the memory (108) responsive to receiving the data processing task and data.

12. The utility meter of any of claims 9 to 11, wherein the data processing task and data are associated with a distributed computing processing task.

13. The utility meter of any of claims 9 to 11, wherein the data processing task and data are associated with a parallel computing processing task.

14. The utility meter of any of claims 9 to 13, wherein the utility meter (101) includes a network interface portion (204) operative to communicate with a server (102) via a network (103).

15. A utility system comprising:a server (102);
a data network (103); and
a utility meter as recited in any of claims 9 to 14.
